# DEMANDE DE BREVET EUROPEEN

(11) **EP 1 932 616 A1**
(43) Date de publication de la demande: **18.06.2008**
(21) Numéro de dépôt: 07291488.0
(22) Date de dépôt: 11.12.2007
(51) Int. Cl.: B23P 15/00, B21H 3/00, B21H 5/00

(54) **Procédé de fabrication de pièces mécaniques élancées tournantes**

(30) Priorité: 11.12.2006 FR 0610775
(71) Demandeur: Mecastamp International, 62110 Henin Beaumont (FR)
(72) Inventeur: Foury, Joël c/o Mecastamp International, 62110 Henin Beaumont (FR)
(74) Mandataire: Demulsant, Xavier

(57) **Abrégé**

Procédé de fabrication de pièces mécaniques élancées tournantes, telles que rotors mâles ou femelles, caractérisé en ce qu'il comprend :
- une première étape de fabrication de la partie centrale de la pièce ;
- une deuxième étape de soudure des tourillons sur le corps central.

## Description

L'invention a trait à un procédé de fabrication de pièces mécaniques.

L'invention concerne plus particulièrement un procédé de fabrication de pièces mécaniques élancées rotatives.

L'invention trouve une application avantageuse dans la fabrication de rotors mâles et femelles, tout particulièrement de grandes dimensions ou soumis à des efforts mécaniques importants. C'est par exemple le cas de rotor employés dans la construction de compresseurs d'engins de terrassement et de chantier ou plus généralement par les machines utilisant des vis sans fin.

Un rotor mâle ou femelle comprend conventionnellement une partie centrale et des axes d'extrémité, de part et d'autre de cette partie centrale.

On connaît déjà, dans l'art antérieur, différents procédés de fabrication de telles pièces mécaniques.

Les pièces hélicoïdales de grandes dimensions pour machines de puissance, extrudeuse ou vis de compresseur sont conventionnellement réalisées par enlèvement de matière. Ces pièces sont tournées ou fraisées, à partir de barres cylindriques ou encore à partir d'ébauches cylindriques comprenant déjà des tourillons.

Le document WO 94/04295 décrit un procédé de fabrication d'une pièce métallique hélicoïdale à pas régulier par torsion à chaud d'une ébauche, ce procédé comprenant la fabrication d'un profilé de départ présentant des nervures disposées radialement autour d'un axe, le chauffage de ce profilé puis l'application d'un couple de torsion jusqu'à obtention d'une section déterminée, et refroidissement.

La mise en oeuvre du procédé décrit dans le document WO 94/04295 nécessite un outillage de torsion et requiert un temps important pour la mise au point, ce qui ne va pas dans le sens d'une fabrication en série.

La fabrication et la livraison de telles pièces mécaniques, dans un délai réduit, et à des coûts compétitifs, sont des objectifs majeurs, dans un contexte d'économie mondialisée.

L'invention vise à fournir un procédé de fabrication permettant d'atteindre de tels objectifs.

A ces fins, l'invention se rapporte, selon un premier aspect, à un procédé de fabrication de pièces mécaniques élancées tournantes, telles que rotors mâles ou femelles, ce procédé comprenant :
- une première étape de fabrication de la partie centrale de la pièce ;
- une deuxième étape de soudure des tourillons sur le corps central.

Dans diverses réalisations, le procédé présente les caractères suivants, le cas échéant combinés :
- la soudure est réalisée par un procédé choisit parmi le groupe comprenant le soudage par inertie, le soudage par balayage d'électrons ;
- une embase d'amorçage est placée entre le corps central et les tourillons ;
- la fabrication de la partie centrale comprend une étape de moulage sable, moulage à la cire perdue, de forgeage, d'estampage, d'extrusion, de laminage et éventuellement de vrillage ;
- la partie centrale est en acier, acier allié, inox ;
- la fabrication de la partie centrale comprend une étape de profilage et de découpe d'une barre profilée ;
- le procédé comprend une étape d'usinage du profil des embases d'amorçage.

L'invention se rapporte, selon un deuxième aspect, à une pièce mécanique issue de la mise en oeuvre d'un procédé tel que présenté ci dessus, les tourillons étant réalisés en un matériau différent de celui de la partie centrale.

Dans une réalisation avantageuse, les tourillons et la partie centrale sont réalisés en acier, acier allié, acier inoxydable.

D'autres objets et avantages de l'invention apparaîtront à la lumière de la description faite ci-après.

Le procédé de fabrication de pièces mécaniques élancées tournantes, telles que rotors mâles ou femelles, comprend :
- une première étape de fabrication de la partie centrale de la pièce ;
- une deuxième étape de soudure des tourillons sur le corps central.

La soudure est réalisée avantageusement par inertie ou par balayage d'électrons. Le soudage par friction ou par inertie (*mechanical power welding*) est un procédé de soudage mécanique connu en soit. La chaleur nécessaire pour le soudage est fournie en frottant les pièces à assembler l'une contre l'autre sous une pression axiale.

Dans une mise en oeuvre, le soudage par inertie des tourillons et de la partie centrale est réalisé par mise en rotation des tourillons et serrage des tourillons contre la partie centrale. Le soudage par inertie permet de souder des matériaux difficilement soudables sans apport de matière extérieure.

Le soudage par balayage d'électrons (ou par faisceau d'électrons) est également une technique connue en elle-même. La soudure est réalisée avantageusement dans une enceinte sous vide, évitant les contaminations et oxydations. L'impact du faisceau d'électrons générant une émission de rayons X, une enceinte de protection assure une protection des opérateurs. Grâce à cette soudure par faisceau d'électrons, il est possible de réaliser des pièces telles que des rotors comprenant des tourillons réalisés en un matériau difficilement soudable sans apport de matière extérieure, comme par exemple métaux réfractaires, métaux à grande conductibilité thermique.

Dans une mise en oeuvre, une embase d'amorçage est placée entre le corps central et les tourillons. Cette embase d'amorçage facilite le soudage.

L'invention permet l'emploi de parties centrales obtenues par des procédés variés. Ainsi, dans une mise en oeuvre, la fabrication de la partie centrale comprend une étape de moulage sable, moulage à la cire perdue de forgeage, d'estampage, d'extrusion, de laminage et éventuellement de vrillage. La partie centrale est par exemple en acier. Dans une autre mise en oeuvre, la fabrication de la partie centrale comprend une étape de profilage et de découpe d'une barre profilée, par laminage, avec éventuellement calibrage, vrillage. Le procédé comprend alors avantageusement une étape d'usinage du profil des embases d'amorçage. La partie centrale peut également être obtenue par forgeage de barres, par exemple par laminage transversal, par forgeage et vrillage.

L'invention permet la réalisation de rotors par l'assemblage de sous ensembles (par soudage par inertie ou par balayage d'électrons), l'assemblage pouvant être réalisé à différents stades d'avancement des sous-ensembles (partie centrale, tourillon), quelles que soient les techniques appliquées et les technologies utilisées pour la réalisation de ces sous ensembles, ainsi que les matériaux utilisés.

Avantageusement, le corps central vrillé est au plus près, voire aux dimensions et géométries ainsi que métallurgiquement apte à l'utilisation directe, et les tourillons le sont aussi.

Par utilisation directe, on designe ici notamment l'implantation de la pièce mécanique dans sa position rotative de fonctionnement (par exemple dans un compresseur d'engin de terrassement).

## Revendications

1. Procédé de fabrication de pièces mécaniques élancées tournantes, telles que rotors mâles ou femelles, **caractérisé en ce qu'**il comprend :
- une première étape de fabrication de la partie centrale de la pièce ;
- une deuxième étape de soudure des tourillons sur le corps central.

2. Procédé selon la revendication 1, **caractérisé en ce que** la soudure est réalisée par un procédé choisit parmi le groupe comprenant le soudage par inertie, le soudage par balayage d'électrons.

3. Procédé selon la revendication 2, **caractérisé en ce qu'**une embase d'amorçage est placée entre le corps central et les tourillons.

4. Procédé selon l'une quelconque des revendications précédentes, **caractérisé en ce que** la fabrication de la partie centrale comprend une étape de moulage sable, moulage à la cire perdue de forgeage,d'estampage, d'extrusion, de laminage et éventuellement de vrillage .

5. Procédé selon la revendication 4, **caractérisé en ce que** la partie centrale est en acier, acier allié, inox.

6. Procédé selon l'une quelconque des revendications 1 à 3, **caractérisé en ce que** la fabrication de la partie centrale comprend une étape de profilage et de découpe d'une barre profilée.

7. Procédé selon la revendication 6, **caractérisé en ce qu'**il comprend une étape d'usinage du profil des embases d'amorçage.

8. Pièce mécanique issue de la mise en oeuvre d'un procédé tel que présenté dans l'une quelconque des revendications précédentes, **caractérisée en ce que** les tourillons sont réalisés en un matériau différent de celui de la partie centrale.

9. Pièce mécanique selon la revendication 8, **caractérisé en ce que** les tourillons et la partie centrale sont réalisés en acier, acier allié, inox
